# EUROPEAN PATENT APPLICATION

(11) **EP 4 318 030 A1**
(43) Date of publication of application: **07.02.2024**
(21) Application number: 21933108.9
(22) Date of filing: 26.03.2021
(51) Int. Cl.: G01S 7/484, G01S 17/42

(54) **SENSOR DEVICE, CONTROL DEVICE, CONTROL METHOD, PROGRAM, AND STORAGE MEDIUM**

(71) Applicant: Pioneer Corporation, Tokyo 113-0021 (JP); Pioneer Smart Sensing Innovations Corporation, Tokyo 113-0021 (JP)
(72) Inventor: SHIROTO Takuya, Kawagoe-shi, Saitama 350-8555 (JP); YANAGISAWA Takuma, Kawagoe-shi, Saitama 350-8555 (JP)
(74) Representative: Vossius & Partner Patentanwälte Rechtsanwälte mbB
(86) International application number: PCT/JP2021/012908
(87) International publication number: WO 2022/201503

(57) **Abstract**

A control unit (300) increases the number of segments in a second direction (Y) followed by a spot irradiation position in a case where a length of an overall field of view (F) in the second direction (Y) is a predetermined first length, as compared with the number of segments in the second direction (Y) followed by the spot irradiation position in a case where the length of the overall field of view (F) in the second direction (Y) is a second length shorter than the first length. Further, the control unit (300) expands a range followed by the spot irradiation position in a case where a size of the overall field of view (F) when viewed from a third direction (Z) is a first size, as compared with a range followed by the spot irradiation position in a case where the size of the overall field of view (F) when viewed from the third direction (Z) is a second size smaller than the first size.

## Description

### TECHNICAL FIELD

The present invention relates to a sensor device, a control device, a control method, a program, and a storage medium.

### BACKGROUND ART

In recent years, various sensor devices such as light detection and ranging (LiDAR) have been developed. The sensor device includes a scanning unit, such as a micro electro mechanical systems (MEMS) mirror, and a light detecting unit that detects reflected light of a spot generated by the scanning unit.

Patent Document 1 describes an example of the sensor device. The sensor device includes a plurality of light receiving elements and an optical element that guides reflected light to each of the plurality of light receiving elements at predetermined time intervals. In a pixel of each light receiving element, an image formation position of an image by the reflected light is shifted by half the pitch of the pixel. By combining image data generated by each light detecting unit, it is possible to detect an object with a higher resolution as compared with a case of using a single light detecting unit.

### RELATED DOCUMENT

### PATENT DOCUMENT

[Patent Document 1] Japanese Unexamined Patent Publication No. 2017-15611

### SUMMARY OF THE INVENTION

### TECHNICAL PROBLEM

In recent sensor devices, there may be a need not only to detect objects with a high resolution but also to detect objects with a wide-angle lens and to detect objects with a telephoto lens. In a case where both a function of detecting objects with a wide-angle lens and a function of detecting objects with a telephoto lens are required, it is desirable for both the functions to be implemented by a single sensor device.

An example of the problem to be solved by the present invention is to switch a sensor device between a mode for detecting an object with a wide-angle lens and a mode for detecting an object with a telephoto lens.

### SOLUTION TO PROBLEM

According to the invention described in claim 1, there is provided a sensor device including:
a scanning unit;
a light detecting unit configured to detect reflected light of a spot generated by the scanning unit; and
a control unit configured to vary a drive waveform of a scanning angle of the scanning unit, which is used to move an irradiation position of the spot, according to a size of an overall field of view of the light detecting unit.

According to the invention described in claim 5,
there is provided a control device including:
a control unit configured to vary a drive waveform of a scanning angle of a scanning unit, which is used to move an irradiation position of a spot generated by the scanning unit, according to a size of an overall field of view of a light detecting unit configured to detect reflected light of the spot.

According to the invention described in claim 6,
there is provided a control method including:
causing a computer to vary a drive waveform of a scanning angle of a scanning unit, which is used to move an irradiation position of a spot generated by the scanning unit, according to a size of an overall field of view of a light detecting unit configured to detect reflected light of the spot.

According to the invention described in claim 7,
there is provided a program causing a computer to have:
a function of varying a drive waveform of a scanning angle of a scanning unit, which is used to move an irradiation position of a spot generated by the scanning unit, according to a size of an overall field of view of a light detecting unit configured to detect reflected light of the spot.

According to the invention described in claim 8, there is provided a storage medium storing the program.

### BRIEF DESCRIPTION OF THE DRAWINGS

Fig. 1 is a perspective view showing a sensor device according to an embodiment.
Fig. 2 is a diagram illustrating a first example of control by a control unit in a case where a size of the overall field of view when viewed from a third direction is a predetermined first size.
Fig. 3 is a diagram illustrating the first example of the control by the control unit in a case where the size of the overall field of view when viewed from the third direction is the predetermined first size.
Fig. 4 is a diagram illustrating a first example of control by the control unit in a case where the size of the overall field of view when viewed from the third direction is a second size smaller than the first size of the overall field of view when viewed from the third direction in the example shown in Fig. 2.
Fig. 5 is a diagram illustrating the first example of the control by the control unit in a case where the size of the overall field of view when viewed from the third direction is the second size smaller than the first size of the overall field of view when viewed from the third direction in the example shown in Fig. 2.
Fig. 6 is a diagram illustrating a second example of the control by the control unit in a case where the size of the overall field of view when viewed from the third direction is the predetermined first size.
Fig. 7 is a diagram illustrating a second example of the control by the control unit in a case where the size of the overall field of view when viewed from the third direction is the second size smaller than the first size of the overall field of view when viewed from the third direction in the example shown in Fig. 6.
Fig. 8 is a diagram illustrating the second example of the control by the control unit in a case where the size of the overall field of view when viewed from the third direction is the second size smaller than the first size of the overall field of view when viewed from the third direction in the example shown in Fig. 6.
Fig. 9 is a diagram illustrating a hardware configuration of the control unit.

### DESCRIPTION OF EMBODIMENTS

Hereinafter, embodiments of the present invention will be described with reference to the drawings. In all the drawings, the same constituent elements are designated by the same reference numerals, and the description thereof will not be repeated as appropriate.

In the present specification, unless otherwise specified, ordinal numbers such as "first", "second", "third", and the like are added merely to distinguish configurations with similar names and do not imply specific characteristics of the configuration (for example, order or importance).

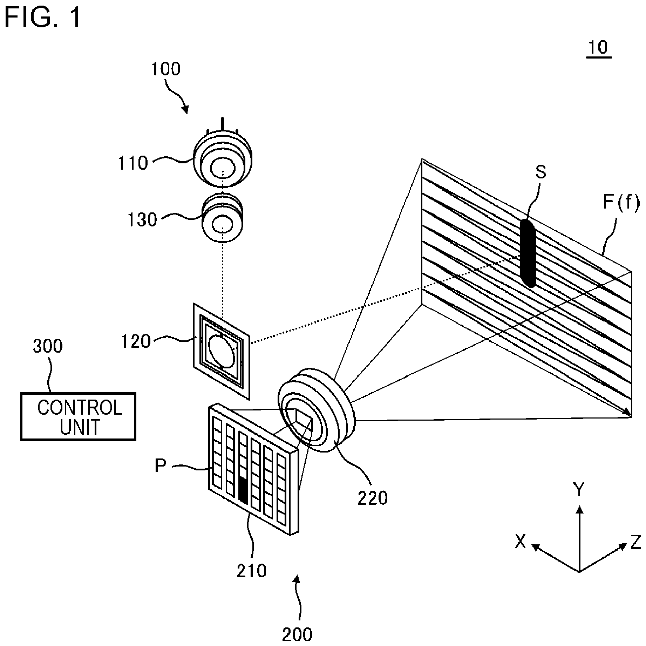

Fig. 1 is a perspective view showing a sensor device 10 according to an embodiment.

In Fig. 1, arrows indicating a first direction X, a second direction Y, and a third direction Z each indicate that a direction from a base to a tip of the arrow is a positive direction of a direction indicated by the arrow and that a direction from the tip to the base of the arrow is a negative direction of the direction indicated by the arrow.

The first direction X is one direction parallel to a horizontal direction orthogonal to a vertical direction. When viewed from the negative direction of the third direction Z, the positive direction of the first direction X is a direction from right to left in the horizontal direction, and the negative direction of the first direction X is a direction from left to right in the horizontal direction. The second direction Y is a direction parallel to the vertical direction. The positive direction of the second direction Y is a direction from bottom to top in the vertical direction, and the negative direction of the second direction Y is a direction from top to bottom in the vertical direction. The third direction Z is one direction parallel to the horizontal direction and orthogonal to the first direction X. When viewed from the negative direction of the first direction X, the positive direction of the third direction Z is a direction from left to right in the horizontal direction, and the negative direction of the third direction Z is a direction from right to left in the horizontal direction. The relationship between the first direction X, the second direction Y, the third direction Z, the horizontal direction, and the vertical direction is not limited to the example described above. The relationship between the first direction X, the second direction Y, the third direction Z, the horizontal direction, and the vertical direction varies depending on the disposition of the sensor device 10. For example, the second direction Y may be parallel to the horizontal direction.

The sensor device 10 includes a transmitting system 100, a receiving system 200, and a control unit 300. In the present embodiment, the sensor device 10 is a biaxial LiDAR in which an optical axis of light transmitted from the transmitting system 100 toward an overall field of view F, which will be described below, and an optical axis of light reflected from the overall field of view F and received by the receiving system 200 are shifted to each other. The transmitting system 100 includes a light source unit 110, a scanning unit 120, and a transmitting system lens 130. The receiving system 200 includes a light detecting unit 210 and a receiving system lens 220. A control unit 300 controls the transmitting system 100 and the receiving system 200.

The light source unit 110 is, for example, a pulsed laser. The wavelength of the light emitted from the light source unit 110 is, for example, infrared rays. The light source unit 110 emits light in a temporally repetitive manner. The emission timing of light from the light source unit 110 is controlled by the control unit 300. In Fig. 1, as indicated by a dashed line extending from the light source unit 110 through the scanning unit 120 toward the overall field of view F, which will be described below, light emitted from the light source unit 110 passes through the transmitting system lens 130 and is reflected by the scanning unit 120 toward the overall field of view F.

In the present embodiment, the scanning unit 120 is a MEMS mirror. The scanning unit 120 may be a scanning unit other than the MEMS mirror. The scanning unit 120 reflects the light emitted from the light source unit 110 toward a virtual plane, which is perpendicular to the third direction Z and onto which the overall field of view F is projected, and generates a spot S, which is light projected onto the virtual plane. The scanning unit 120 moves a position where the spot S is generated within the virtual plane in two directions, that is, the first direction X and the second direction Y.

In the present embodiment, the transmitting system lens 130 is a zoom lens having a plurality of lenses arranged along the optical axis of the light emitted from the light source unit 110. The control unit 300 controls the size of the spot S projected onto the virtual plane perpendicular to the third direction Z by controlling the distance between the plurality of lenses. Specifically, the size of the spot S becomes larger as the combined focal length is shortened by changing the distance between the plurality of lenses. On the other hand, the size of the spot S becomes smaller as the combined focal length is lengthened by changing the distance between the plurality of lenses. The transmitting system lens 130 may be a lens different from the zoom lens.

In the present embodiment, the light detecting unit 210 is a two-dimensional array sensor. The light detecting unit 210 detects the reflected light of the spot S. The light detecting unit 210 has a plurality of pixels P arranged in a matrix along two directions, that is, the first direction X and the second direction Y. In the example shown in Fig. 1, the overall field of view F, in which light is detected by the entire plurality of pixels P through the receiving system lens 220, is projected onto the virtual plane perpendicular to the third direction Z.

Within the overall field of view F, a plurality of fields of view f corresponding to the plurality of pixels P for each pixel of the light detecting unit 210 are arranged in a matrix in two directions, that is, the first direction X and the second direction Y. When viewed from the negative direction of the third direction Z, the position of each field of view f with respect to the center of the overall field of view F is inverted by the receiving system lens 220 in the first direction X and the second direction Y with respect to the position of each pixel P with respect to the center of the light detecting unit 210. In the example shown in Fig. 1, the pixels P in which the reflected light of the spot S emitted to the overall field of view F is detected are indicated by being shaded in black.

In the present embodiment, the receiving system lens 220 is a zoom lens having a plurality of lenses arranged from the light detecting unit 210 toward the overall field of view F. The control unit 300 controls the distance between the plurality of lenses to control the size of the overall field of view F projected onto the virtual plane perpendicular to the third direction Z and the sizes of the plurality of fields of view f arranged in a matrix in two directions, that is, the first direction X and the second direction Y, within the overall field of view F. Specifically, the sizes of the overall field of view F and of the plurality of fields of view f become larger as the combined focal length is shortened by changing the distance between the plurality of lenses. On the other hand, the sizes of the overall field of view F and of the plurality of fields of view f become smaller as the combined focal length is lengthened by changing the distance between the plurality of lenses. The receiving system lens 220 may be a lens different from the zoom lens.

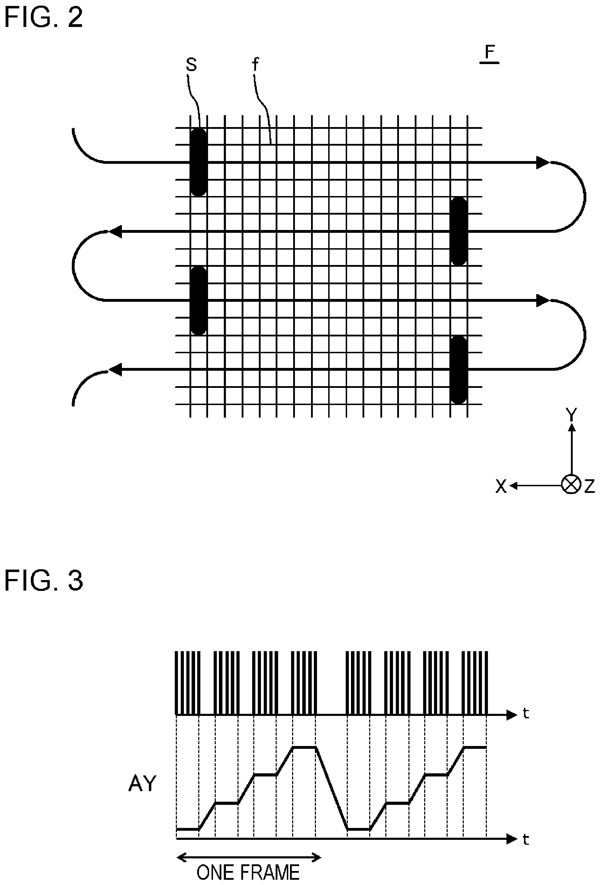

Figs. 2 and 3 are diagrams illustrating a first example of control by the control unit 300 when the size of the overall field of view F when viewed from the third direction Z is a predetermined first size.

First, Fig. 2 will be described.

In Fig. 2, an X-marked circle indicating the third direction Z indicates that a direction from the foreground to the background of the paper plane is the positive direction of the third direction Z and that a direction from the background to the foreground of the paper plane is the negative direction of the third direction Z.

In Fig. 2, the plurality of substantially square fields of view f are arranged in a matrix in two directions, that is, the first direction X and the second direction Y, when viewed from the negative direction of the third direction Z.

In the example shown in Fig. 2, the light emitted from the light source unit 110 is a linear beam that is longer in the second direction Y than in the first direction X. The length of the spot S in the first direction X is substantially equal to the length of the field of view f in the first direction X. The length of the spot S in the second direction Y is substantially four times the length of the field of view f in the second direction Y. In Fig. 2, arrows passing through the plurality of fields of view f each indicate that the irradiation position of the spot S moves from the base to the tip of the arrow. Hereinafter, the irradiation position of the spot S will be referred to as a spot irradiation position as necessary. Fig. 2 shows four spots S emitted at different timings.

The control unit 300 controls the amplitude of the drive waveform of the scanning angle of the scanning unit 120, which is used to move the spot irradiation position, to control a range (FOV) followed by the spot irradiation position when viewed from the third direction Z. Specifically, the length in the first direction X of the range followed by the spot irradiation position when viewed from the third direction Z is determined according to the amplitude of the drive waveform of the scanning angle of the scanning unit 120, which is used to move the spot irradiation position in the first direction X. The length in the second direction Y of the range followed by the spot irradiation position when viewed from the third direction Z is determined according to the amplitude of the drive waveform of the scanning angle of the scanning unit 120, which is used to move the spot irradiation position in the second direction Y.

Next, Fig. 3 will be described.

A timing chart in the upper part of Fig. 3 shows a timing chart of pulse triggers of the light source unit 110. The number of triggers depicted in the timing chart in the uppermost part of Fig. 3 is schematically shown and does not suggest the number of spots S emitted to the plurality of fields of view f shown in Fig. 2.

The timing chart in the lower part of Fig. 3 shows the drive waveform of a scanning angle AY of the scanning unit 120. The scanning angle AY is a scanning angle of the scanning unit 120 for moving a position irradiated with the spot S in the second direction Y. In the timing chart in the lower part of Fig. 3, the position irradiated with the spot S moves toward the negative direction of the second direction Y as the scanning angle AY increases, and the position irradiated with the spot S moves toward the positive direction of the second direction Y as the scanning angle AY decreases.

Next, the control by the control unit 300 will be described with reference to Figs. 2 and 3.

In a time section from the start to the end of one frame, the control unit 300 repeatedly alternates between the movement of the spot irradiation position from the positive direction to the negative direction of the first direction X and the movement of the spot irradiation position from the negative direction to the positive direction of the first direction X. Hereinafter, as necessary, the movement of the spot irradiation position from the positive direction to the negative direction of the first direction X will be referred to as negative directional movement of the spot irradiation position in the first direction X, and the movement of the spot irradiation position from the negative direction to the positive direction of the first direction X will be referred to as positive directional movement of the spot irradiation position in the first direction X. The control unit 300 increases the scanning angle AY in the time section between the time section of the negative directional movement of the spot irradiation position in the first direction X and the time section of the positive directional movement of the spot irradiation position in the first direction X, thereby moving the spot irradiation position from the positive direction to the negative direction of the second direction Y by a distance substantially equal to the length of the spot S in the second direction Y. The negative directional movement of the spot irradiation position in the first direction X is performed twice, and the positive directional movement of the spot irradiation position in the first direction X is performed twice. The control unit 300 controls the emission timing of light from the light source unit 110 in the time section of the negative directional movement of the spot irradiation position in the first direction X and the time section of the positive directional movement of the spot irradiation position in the first direction X, thereby substantially matching the irradiation pitch of the spot S in the first direction X with the array pitch of the plurality of fields of view f in the first direction X. As a result, the spot S is emitted to each field of view f through which the spot irradiation position passes in the time section of the negative directional movement of the spot irradiation position in the first direction X and the time section of the positive directional movement of the spot irradiation position in the first direction X.

In the time section from the start to the end of one frame, the control unit 300 substantially matches the range followed by the spot irradiation position when viewed from the third direction Z with the overall field of view F when viewed from the third direction Z. Specifically, the control unit 300 makes the length in the first direction X of the range followed by the spot irradiation position when viewed from the third direction Z substantially equal to the length of the overall field of view F in the first direction X when viewed from the third direction Z. The control unit 300 makes the length in the second direction Y of the range followed by the spot irradiation position when viewed from the third direction Z substantially equal to the length of the overall field of view F in the second direction Y when viewed from the third direction Z.

The control unit 300 returns the scanning angle AY to the initial value and ends the control for one frame. The control unit 300 repeats the control described above in each of subsequent frames.

The control of the control unit 300 is not limited to the examples shown in Figs. 2 and 3.

For example, the control unit 300 may not match the irradiation pitch of the spot S in the first direction X in the time section of the negative directional movement of the spot irradiation position in the first direction X and the time section of the positive directional movement of the spot irradiation position in the first direction X with the array pitch of the plurality of fields of view f in the first direction X. For example, in a case where the speed of the negative directional movement of the spot irradiation position in the first direction X or the speed of the positive directional movement of the spot irradiation position in the first direction X is relatively high and the temporal interval of the emission timing of light from the light source unit 110 cannot be made very short because of factors such as eye safety, the irradiation pitch of the spot S in the first direction X may be larger than the array pitch of the plurality of fields of view f in the first direction X. In this case, in a certain time section, the plurality of spots S may be emitted in the first direction X at a pitch larger than the array pitch of the plurality of fields of view f in the first direction X, and in a subsequent time section following the time section, the spot S may be emitted to a position located in the first direction X between the positions irradiated with the spots S in the previous time section.

In addition, for example, the control unit 300 may move the spot irradiation position from the negative direction to the positive direction of the second direction Y by a distance longer than the length of the spot S in the second direction Y in the time section between the time section of the negative directional movement of the spot irradiation position in the first direction X and the time section of the positive directional movement of the spot irradiation position in the first direction X.

In the example shown in Fig. 2, the length of the spot S in the first direction X is substantially equal to the length of the field of view f in the first direction X. However, the length of the spot S in the first direction X may be different from the length of the field of view f in the first direction X. For example, the length of the spot S in the first direction X may be an integral multiple of the length of the field of view f in the first direction X.

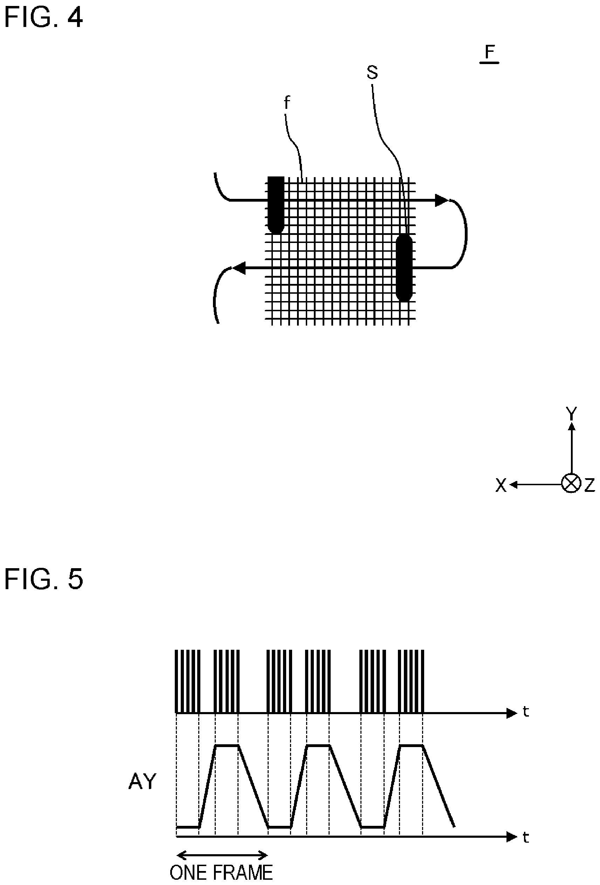

Figs. 4 and 5 are diagrams illustrating a first example of control by the control unit 300 in a case where the size of the overall field of view F when viewed from the third direction Z is a second size smaller than the first size of the overall field of view F when viewed from the third direction Z in the example shown in Fig. 2. The first example described with reference to Figs. 4 and 5 is the same as the example described with reference to Figs. 2 and 3 except for the following points.

The control unit 300 controls the receiving system lens 220 to switch between the size of the overall field of view F when viewed from the third direction Z in the example shown in Fig. 2 and the size of the overall field of view F when viewed from the third direction Z in the example shown in Fig. 4. The lengths of the overall field of view F and of the field of view f in the first direction X and the second direction Y in the example shown in Fig. 4 are substantially half the lengths of the overall field of view F and of the field of view f in the first direction X and the second direction Y in the example shown in Fig. 2, respectively.

The size of the spot S when viewed from the third direction Z in the example shown in Fig. 4 is substantially equal to the size of the spot S when viewed from the third direction Z in the example shown in Fig. 2. In the example shown in Fig. 4, the length of the spot S in the first direction X is substantially twice the length of the field of view f in the first direction X. The length of the spot S in the second direction Y is substantially eight times the length of the field of view f in the second direction Y.

In the time section from the start to the end of one frame, the control unit 300 sequentially performs the negative directional movement of the spot irradiation position in the first direction X and the positive directional movement of the spot irradiation position in the first direction X. The control unit 300 increases the scanning angle AY in the time section between the time section of the negative directional movement of the spot irradiation position in the first direction X and the time section of the positive directional movement of the spot irradiation position in the first direction X, thereby moving the spot irradiation position from the positive direction to the negative direction of the second direction Y by a distance substantially equal to the length of the spot S in the second direction Y. The control unit 300 controls the emission timing of light from the light source unit 110 in the time section of the negative directional movement of the spot irradiation position in the first direction X and the time section of the positive directional movement of the spot irradiation position in the first direction X, thereby substantially matching the irradiation pitch of the spot S in the first direction X with the array pitch of the plurality of fields of view f in the first direction X. As a result, the spot S is emitted to each field of view f through which the spot irradiation position passes in the time section of the negative directional movement of the spot irradiation position in the first direction X and the time section of the positive directional movement of the spot irradiation position in the first direction X.

In the time section from the start to the end of one frame, the control unit 300 substantially matches the range followed by the spot irradiation position when viewed from the third direction Z with the overall field of view F when viewed from the third direction Z. Specifically, the control unit 300 makes the length in the first direction X of the range followed by the spot irradiation position when viewed from the third direction Z substantially equal to the length of the overall field of view F in the first direction X when viewed from the third direction Z. The control unit 300 makes the length in the second direction Y of the range followed by the spot irradiation position when viewed from the third direction Z substantially equal to the length of the overall field of view F in the second direction Y when viewed from the third direction Z.

The control of the control unit 300 is not limited to the examples shown in Figs. 4 and 5. For example, there may be a case where the length of the spot S in the second direction Y is relatively long and the negative directional movement of the spot irradiation position in the first direction X or the positive directional movement of the spot irradiation position in the first direction X is performed only once so that the spot S may be emitted to all the fields of view f. In this case, the negative directional movement of the spot irradiation position in the first direction X or the positive directional movement of the spot irradiation position in the first direction X may be performed only once per frame.

Next, the examples shown in Figs. 2 and 3 and the examples shown in Figs. 4 and 5 are compared.

The control unit 300 varies the drive waveform of the scanning angle for moving the spot irradiation position according to the size of the overall field of view F when viewed from the third direction Z. Specifically, the control unit 300 increases the number of segments in the second direction Y followed by the spot irradiation position in a case where the length of the overall field of view F in the second direction Y is the predetermined first length as shown in Fig. 2, as compared with the number of segments in the second direction Y followed by the spot irradiation position in a case where the length of the overall field of view F in the second direction Y is the second length shorter than the first length as shown in Fig. 4. Further, the control unit 300 expands the range followed by the spot irradiation position in a case where the size of the overall field of view F when viewed from the third direction Z as shown in Fig. 2 is the first size, as compared with the range followed by the spot irradiation position in a case where the size of the overall field of view F when viewed from the third direction Z as shown in Fig. 4 is the second size smaller than the first size.

The sensor device 10 enlarges the size of the overall field of view F when viewed from the third direction Z in the mode shown in Figs. 2 and 3 as compared with the mode shown in Figs. 4 and 5. The sensor device 10 reduces the size of the overall field of view F when viewed from the third direction Z in the mode shown in Figs. 4 and 5 as compared with the mode shown in Figs. 2 and 3. Therefore, according to the control of the control unit 300, the sensor device 10 can switch between the mode for detecting the object with a wide-angle lens as shown in Figs. 2 and 3 and the mode for detecting the object with a telephoto lens as shown in Figs. 4 and 5.

In the examples described above, in both the example shown in Fig. 3 and the example shown in Fig. 5, the drive waveform of the scanning angle AY is a step function. However, the drive waveform of the scanning angle AY may be, for example, a triangular wave or a sawtooth wave.

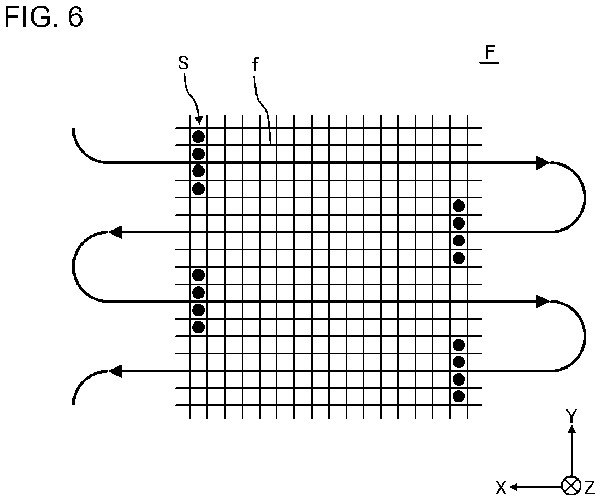

Fig. 6 is a diagram illustrating a second example of the control by the control unit 300 in a case where the size of the overall field of view F when viewed from the third direction Z is the predetermined first size. The second example described with reference to Fig. 6 is the same as the first example described with reference to Figs. 2 and 3 except for the following points. In the second example described with reference to Fig. 6, the timing chart of pulse triggers of the light source unit 110 is the same as the timing chart in the upper part of Fig. 3, and the drive waveform of the scanning angle AY of the scanning unit 120 is the same as the timing chart in the lower part of Fig. 3.

In the example shown in Fig. 6, the light emitted from the light source unit 110 is a multi-beam. The length of the spot S in the second direction Y is substantially four times the length of the field of view f in the second direction Y. The spot S has four portions arranged in the second direction Y. In the example shown in Fig. 6, the array pitch of these four portions in the second direction Y is substantially equal to the array pitch of the plurality of fields of view f in the second direction Y.

The control unit 300 moves the spot irradiation position in the same aspect as the movement aspect of the spot irradiation position described with reference to Figs. 2 and 3.

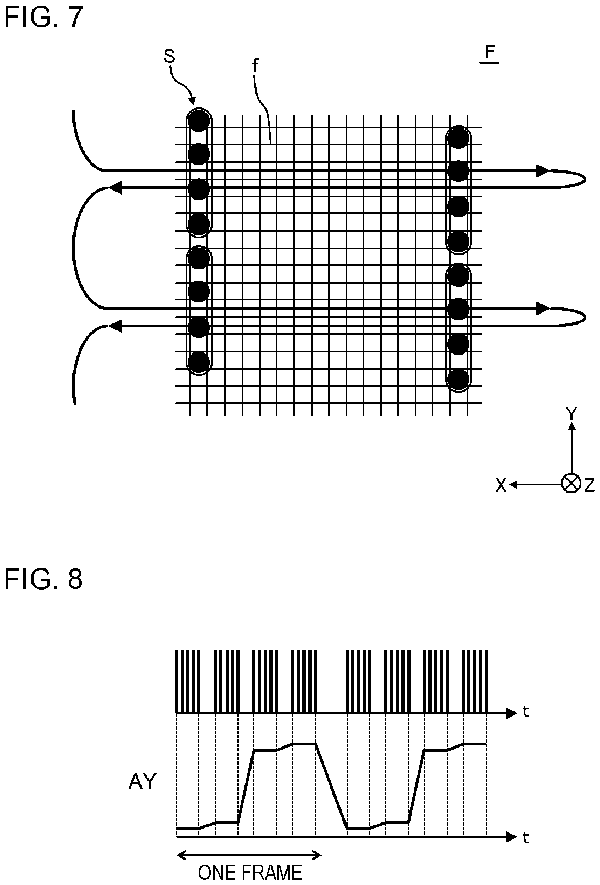

Figs. 7 and 8 are diagrams illustrating a second example of the control by the control unit 300 in a case where the size of the overall field of view F when viewed from the third direction Z is the second size smaller than the first size of the overall field of view F when viewed from the third direction Z in the example shown in Fig. 6. The second example described with reference to Figs. 7 and 8 is the same as the first example described with reference to Figs. 4 and 5 except for the following points.

In the example shown in Fig. 7, the length of the spot S in the second direction Y is substantially seven times the length of the field of view f in the second direction Y. The array pitch in the second direction Y of four portions arranged in the second direction Y within the spot S is substantially twice the array pitch of the plurality of fields of view f in the second direction Y.

In the time section from the start to the end of the first half of one frame, the control unit 300 repeatedly alternates between the negative directional movement of the spot irradiation position in the first direction X and the positive directional movement of the spot irradiation position in the first direction X. The control unit 300 increases the scanning angle AY in the time section after the end of the negative directional movement of the spot irradiation position in the first direction X and before the start of the positive directional movement of the spot irradiation position in the first direction X, thereby moving the spot irradiation position from the positive direction to the negative direction of the second direction Y by a distance substantially half the array pitch in the second direction Y of the plurality of portions arranged in the second direction Y within the spot S. The control unit 300 increases the scanning angle AY in the time section after the end of the negative directional movement of the spot irradiation position in the first direction X and before the start of the positive directional movement of the spot irradiation position in the first direction X, thereby moving the spot irradiation position from the positive direction to the negative direction of the second direction Y by a distance substantially equal to the length of the spot S in the second direction Y. The negative directional movement of the spot irradiation position in the first direction X is performed twice, and the positive directional movement of the spot irradiation position in the first direction X is performed twice. The control unit 300 controls the emission timing of light from the light source unit 110 in the time section of the negative directional movement of the spot irradiation position in the first direction X and the time section of the positive directional movement of the spot irradiation position in the first direction X, thereby substantially matching the irradiation pitch of the spot S in the first direction X with the array pitch of the plurality of fields of view f in the first direction X. As a result, the spot S is emitted to each field of view f through which the spot irradiation position passes in the time section of the negative directional movement of the spot irradiation position in the first direction X and the time section of the positive directional movement of the spot irradiation position in the first direction X.

In the examples shown in Figs. 7 and 8, the control unit 300 irradiates the spot irradiation position with the above four portions of the spot S in the time section of the negative directional movement of the spot irradiation position in the first direction X. The control unit 300 emits at least one portion of the above four portions to a position located in the second direction Y between positions irradiated with the above four portions in the time section of the negative directional movement of the spot irradiation position in the first direction X, in the time section of the positive directional movement of the spot irradiation position in the first direction X. The control of the control unit 300 is not limited to the examples shown in Figs. 7 and 8. For example, the number of the plurality of portions arranged in the second direction Y within the spot S may be other than four.

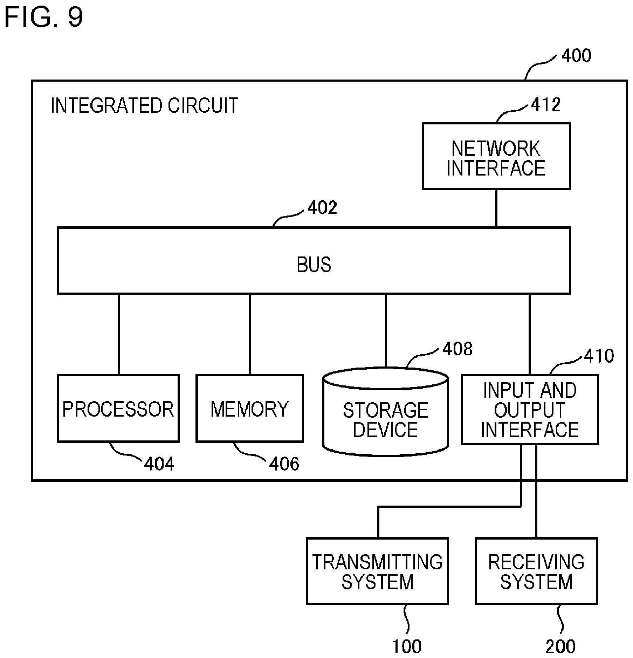

Fig. 9 is a diagram illustrating a hardware configuration of the control unit 300. The control unit 300 is implemented using an integrated circuit 400. The integrated circuit 400 is, for example, a system-on-a-chip (SoC).

The integrated circuit 400 includes a bus 402, a processor 404, a memory 406, a storage device 408, an input and output interface 410, and a network interface 412. The bus 402 is a data transmission path for the processor 404, the memory 406, the storage device 408, the input and output interface 410, and the network interface 412 to transmit and receive data to and from each other. However, a method of mutually connecting the processor 404, the memory 406, the storage device 408, the input and output interface 410, and the network interface 412 is not limited to bus connection. The processor 404 is an arithmetic processing device implemented using a microprocessor or the like. The memory 406 is a memory implemented using a random access memory (RAM) or the like. The storage device 408 is a storage device implemented using a read only memory (ROM), a flash memory, or the like.

The input and output interface 410 is an interface for connecting the integrated circuit 400 to peripheral devices. The transmitting system 100 and the receiving system 200 are connected to the input and output interface 410.

The network interface 412 is an interface for connecting the integrated circuit 400 to a network. This network is a network such as a controller area network (CAN), for example. A method for the connection of the network interface 412 to the network may be a wireless connection or a wired connection.

The storage device 408 stores program modules for implementing the function of the control unit 300. The processor 404 reads out and executes these program modules on the memory 406, thereby implementing the function of the control unit 300.

The hardware configuration of the integrated circuit 400 is not limited to the configuration shown in Fig. 9. For example, the program module may be stored in the memory 406. In this case, the integrated circuit 400 may not include the storage device 408.

Although the embodiments of the present invention have been described above with reference to the drawings, these are examples of the present invention, and various configurations other than the above can also be employed.

### REFERENCE SIGNS LIST

- 10: sensor device
- 100: transmitting system
- 110: light source unit
- 120: scanning unit
- 130: transmitting system lens
- 200: receiving system
- 210: light detecting unit
- 220: receiving system lens
- 300: control unit
- 400: integrated circuit
- 402: bus
- 404: processor
- 406: memory
- 408: storage device
- 410: input and output interface
- 412: network interface
- AY: scanning angle
- F: overall field of view
- P: pixel
- S: spot
- X: first direction
- Y: second direction
- Z: third direction
- f: field of view

## Claims

1. A sensor device comprising:
a scanning unit;
a light detecting unit configured to detect reflected light of a spot generated by the scanning unit; and
a control unit configured to vary a drive waveform of a scanning angle of the scanning unit, which is used to move an irradiation position of the spot, according to a size of an overall field of view of the light detecting unit.

2. The sensor device according to claim 1,
wherein the control unit is configured to increase the number of segments in a predetermined direction followed by the irradiation position in a case where a length of the overall field of view in the predetermined direction is a predetermined first length, as compared with the number of segments in the predetermined direction followed by the irradiation position in a case where the length of the overall field of view in the predetermined direction is a second length shorter than the first length.

3. The sensor device according to claim 1 or 2,
wherein the control unit is configured to expand a range followed by the irradiation position in a case where the size of the overall field of view is a predetermined first size, as compared with a range followed by the irradiation position in a case where the size of the overall field of view is a second size smaller than the first size.

4. The sensor device according to any one of claims 1 to 3,
wherein the control unit is configured to emit a plurality of portions arranged in a predetermined direction within the spot to the irradiation position in a predetermined time section, and to emit at least one portion of the plurality of portions to a position located between positions irradiated with the plurality of portions in the predetermined time section, in the other time section different from the predetermined time section.

5. A control device comprising:
a control unit configured to vary a drive waveform of a scanning angle of a scanning unit, which is used to move an irradiation position of a spot generated by the scanning unit, according to a size of an overall field of view of a light detecting unit configured to detect reflected light of the spot.

6. A control method comprising:
causing a computer to vary a drive waveform of a scanning angle of a scanning unit, which is used to move an irradiation position of a spot generated by the scanning unit, according to a size of an overall field of view of a light detecting unit configured to detect reflected light of the spot.

7. A program causing a computer to have:
a function of varying a drive waveform of a scanning angle of a scanning unit, which is used to move an irradiation position of a spot generated by the scanning unit, according to a size of an overall field of view of a light detecting unit configured to detect reflected light of the spot.

8. A storage medium storing the program according to claim 7.
